# EUROPÄISCHE PATENTANMELDUNG

(11) **EP 0 629 534 A2**
(43) Veröffentlichungstag der Anmeldung: **21.12.1994**
(21) Anmeldenummer: 94107806.5
(22) Anmeldetag: 20.05.1994
(51) Int. Cl.: B60T 13/08, B60T 7/20

(54) **Mechanische Löseeinrichtung**

(30) Priorität: 16.06.1993 PL 29938493; 27.07.1993 DE 4325111
(71) Anmelder: Spägele, Gerhard, D-91341 Röttenbach (DE); Sosna, Edward Dr.-Ing., PL-43300 Bielsko-Biala (PL)
(72) Erfinder: Spägele, Gerhard, D-91341 Röttenbach (DE); Sosna, Edward Dr.-Ing., PL-43300 Bielsko-Biala (PL)
(74) Vertreter: Rau, Manfred, Dr. Dipl.-Ing.

(57) **Zusammenfassung**

Eine mechanische Löseeinrichtung (1) zum automatischen Lösen von Auflaufbremsvorrichtungen bei der Rückwärtsfahrt von auflaufgebremsten Anhängern sieht einen schwenkbaren Winkelhebel (8) vor, der gelenkig mit den Primärbremsbacken (4) und Sekundärbremsbacken (5) der Auflauftrommelbremse verbunden ist. Durch die gegenseite Zuordnung und Führung der einzelnen Bauteile der Löseeinrichtung (1) wird ein automatisches Lösen der Außlaufbremse bei einer Rückwärtsfahrt gewährleistet.

## Beschreibung

Die Erfindung betrifft eine mechanische Löseeinrichtung zum automatischen Lösen von Auflaufbremsvorrichtungen bei der Rückwärtsfahrt von auflaufgebremsten Anhängern mit den im Oberbegriff des Anspruches 1 angegebenen Merkmalen.

Bei den bekannten mechanischen Löseeinrichtungen ist der Lösemechanismus in der Regel im Bereich der Primär- und Sekundärbremsbacken zwischen deren benachbarten, dem Spannschloß abgewandten Enden angeordnet. Der Lösemechanismus besteht aus einem Hebel, welcher drehbar an der der Auflauf-Trommelbremse zugeordneten Ankerplatte gelagert ist und der jeweils derart gelenkig mit den einander zugewandten Enden von Primär- und Sekundärbremsbacken verbunden ist, daß bei einer Rückwärtsfahrt die Bremsbacken durch eine Drehbewegung des Hebels unter dem Einfluß des von der Bremstrommel auf die Bremsbacken ausgeübten Momentes anhebbar sind.

Durch einen solchen Lösungsmechanismus soll eine einwandfreie Funktion der Bremse sowohl bei Vorwärtsfahrt und bei Stillstand sichergestellt, als auch automatisch bei Rückwärtsfahrt des Anhängers die Bremse gelöst werden.

Bei dem bekannten Lösemechanismus ist eine einwandfreie Funktion in allen drei Fällen nur schwer erreichbar, da diese bekannten Lösemechanismen sehr empfindlich auf Toleranzen innerhalb der einzelnen Bauteile des Mechanismus reagieren. Dies trifft insbesondere für die Lösefunktion bei Rückwärtsfahrt zu.

Davon ausgehend liegt der Erfindung die Aufgabe zugrunde, unter Beibehaltung einer einfachen Konstruktion den Lösemechanismus so zu verbessern, daß eine einwandfreie, von Toleranzen weniger beeinflußte Funktion der Bremse in allen Betriebszuständen gewährleistet ist.

Diese Aufgabe wird durch die im Kennzeichnungsteil des Anspruches 1 angegebenen Merkmale gelöst. Die entsprechenden konstruktiven Maßnahmen - nämlich die eine größere Beweglichkeit des Hebels hervorrufende Lagerung des Hebels an der Ankerplatte vorzugsweise mittels eines Dreh-Schiebe-Gelenks, der eine zusätzliche Zwangsführung des Primärbremsbackens hervorrufende Anschlag an der Ankerplatte und die für ein sauberes Abheben des Sekundärbremsbackens von der Bremstrommel sorgende gelenkige Verbindung des Hebels mit dem Sekundärbremsbacken nach Art eines Dreh-Schiebe-Gelenkes mit zwei Schiebe-Endstellungen - sorgen für einen größeren Verstellweg der beiden Bremsbacken sowie eine saubere Halterung der Bremsbacken in den einzelnen funktionalen Stellungen. Durch die verbesserte Zwangsführung der einzelnen Bauteile werden darüber hinaus die kinematischen Abläufe beim Überführen der Bremsbacken von einer funktionalen Stellung in die andere - also z.B. von der Neutralstellung bei Vorwärtsfahrt in die lösestellung bei Rückwärtsfahrt - leichtgängig und zuverlässig durchgeführt.

Weitere Merkmale, Einzelheiten und Vorteile der Erfindung sind den Unteransprüchen und der nachfolgenden Beschreibung entnehmbar, in der Ausführungsbeispiele des Erfindungsgegenstandes anhand der beigefügten Zeichnungen näher erläutert werden Es zeigen
- Fig. 1: eine Seitenansicht einer erfindungsgemäßen Löseeinrichtung in einer ersten Ausführungsform für eine Auflauf-Trommelbremse in Neutralstellung bei Vorwärtsfahrt,
- Fig. 2: eine Seitenansicht analog Fig. 1 in Lösestellung bei Rückwärtsfahrt, und
- Fig. 3 und 4: Seitenansichten analog Fig. 1 und 2 einer erfindungsgemäßen Löseeinrichtung in einer zweiten, vereinfachten Ausführungsform.

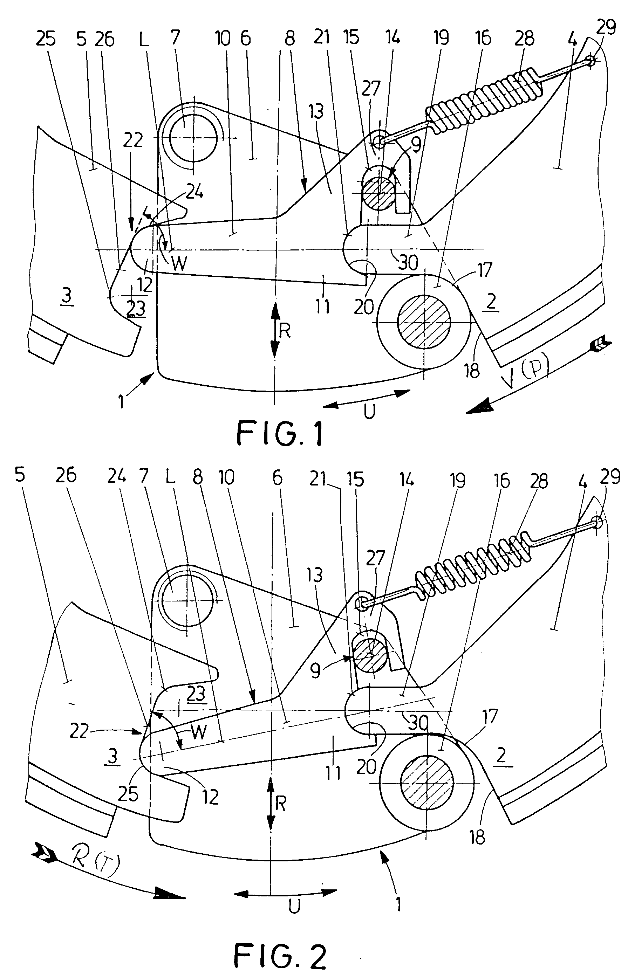

Die Fig. 1 und 2 zeigen eine als Ganzes mit 1 bezeichnete Löseeinrichtung in einer ersten Ausführungsform, die im Bereich der beiden benachbarten, dem Spannschloß der Auflauf-Trommelbremse abgewandten Enden 2, 3 des Primärbremsbackens 4 bzw. Sekundärbremsbackens 5 der Bremse angeordnet ist.

Die Löseeinrichtung 1 weist dabei eine Ankerplatte 6 auf, die parallel zur Rotationsebene des mit der Auflauf-Trommelbremse versehenen Rades angeordnet und um eine Schwenkachse 7 schwenkbar an dem nicht näher dargestellten Ankerblech der Trommelbremse gelagert ist. Weiterhin ist ein Winkelhebel 8 vorgesehen, der mittels eines Dreh-Schiebe-Gelenkes 9 drehbar und verschiebbar an der Ankerplatte 6 gelagert ist. Der Winkelhebel 8 weist einen im wesentlichen in Umfangsrichtung U der Trommelbremse verlaufenden Verbindungsschenkel 10 auf, der an seinen beiden Enden 11, 12 jeweils gelenkig mit den einander zugewandten Enden 2, 3 von Primär-4 und Sekundärbremsbacken 5 verbunden ist. Von dem dem Primärbremsbacken 4 zugewandten Ende 11 steht radial nach innen der Lagerschenkel 13 ab, der das Dreh-Schiebe-Gelenk 9 trägt. Letzteres ist durch einen rechtwinklig von der Ankerplatte 6 abstehenden Lagerbolzen 14 und einen von diesem durchsetzten Schlitz 15 im Lagerschenkel 13 gebildet. Der Schlitz 15 verläuft im wesentlichen in Radialrichtung R der Trommelbremse und damit etwa rechtwinklig zur Längsachse L des Verbindungsschenkels 10.

Im Bereich vor dem Ende 2 des Primärbremsbackens 4 trägt die Ankerplatte 6 einen rechtwinklig davon abstehenden, flachzylindrischen Anschlag 16 zur Abstützung des Primärbremsbackens 4. Dabei stützt sich der Primärbremsbacken 4 mit einer konkav geformten Anschlagfläche 17 am Anschlag 16 ab. Der konkave Wölbungbereich der Anschlagfläche 17 ist zwischen der radial nach außen verlaufenden Endkante 18 des Primärbremsbackens 4 und einem fingerfömigen Fortsatz 19 am radial innen liegenden Bereich des Endes 2 des Primärbremsbackens 4 gebildet. Der Fortsatz 19 steht dabei schräg radial einwärts vom Ende 2 des Primärbremsbackens 4 ab und greift zwischen dem Anschlag 16 und dem Lagerbolzen 14 an der Ankerplatte 6 hindurch. Mit seiner halbkreisförmig konvex geformten Endfläche 20 stützt sich der fingerförmige Fortsatz 19 in einer halbkreisförmig konkav geformten, pfannenartigen Lagerfläche 21 am Ende 11 des Verbindungsschenkels 10 des Winkelhebels 8 ab und bildet somit eine Drehgelenkverbindung zwischen dem Primärbremsbacken 4 und dem Winkelhebel 8.

Die Verbindung zwischen dem dem Sekundärbremsbacken 5 zugewandten Ende 12 des Verbindungsschenkels 10 und dem Sekundärbremsbacken 5 erfolgt über ein Dreh-Schiebe-Gelenk 22, das durch den Eingriff des halbkreisförmig konvex geformten Endes 12 des Verbindungsschenkels 11 in eine Aussparung 23 am Ende 3 des Sekundärbremsbackens 5 gebildet ist. Diese Aussparung 23 verläuft quer zur Längsachse L des Verbindungsschenkels 10 und bildet mit ihren beiden Endflächen 24, 25 die Anschläge für zwei Schiebe-Endstellungen des Verbindungsschenkels 10 gegenüber dem Sekundärbremsbacken 5. Das freie Ende 12 des Verbindungsschenkels 10 stützt sich am Grund 26 der Aussparung 23 ab. Der als ebene Anschlagfläche ausgebildete Grund 26 der Aussparung 23 bildet mit der Längsachse L des Verbindungsschenkels 10 einen spitzen Winkel W. Die Funktion dieser Anordnung wird im folgenden noch näher beschrieben.

Zwischen dem freien Ende 27 des Lagerschenkels 13 des Winkelhebels 8 und dem Primärbremsbacken 4 ist eine Zugfeder 28 eingesetzt. Am Primärbremsbacken 4 greift diese Zugfeder 28 an einem in Umfangsrichtung vom Ende 2 beabstandeten Punkt 29 an.

Im folgenden wird die Funktion der Löseeinrichtung 1 näher erläutert:
Bei Vorwärtsfahrt (Fig. 1) nimmt die Löseeinrichtung ihre Neutralstellung ein, in der der Primärbremsbacken 4 am Anschlag 16 an der Ankerplatte 6 abgestützt ist. Dies erfolgt im wesentlichen unter dem Einfluß des von der Bremstrommel in Pfeilrichtung V auf den Primärbremsbacken 4 aufgebrachten Reibmoment, das bis zu einem gewissen Maße auch bei nichtbetätigter Auflaufbremse wirkt.

Gleichzeitig ist der Winkelhebel 8 unter dem Einfluß der Zugfeder 28 und der Zwangsbeaufschlagung durch den fingerförmigen Fortsatz 19 am Primärbremsbacken 4 in eine im Uhrzeigersinn gemäß Fig. 1 nach oben verschwenkte Stellung gehalten, in der das Ende 12 seines Verbindungsschenkels 10 in der oberen Schiebe-Endstellung in der Aussparung 23 des Sekundärbremsbackens 5 liegt. Die Neutralstellung des Sekundärbremsbackens 5 wird dabei eingehalten, da die Bremstrommel ein in Pfeilrichtung V wirkendes Reibmoment auf den Sekundärbremsbacken 5 ausübt, das versucht, den Sekundärbremsbacken 5 im Uhrzeigersinn bezüglich Fig. 1 zu drehen. Damit verbleibt das Ende 12 des Verbindungsschenkels 10 in dieser Schiebe-Endstellung an der ersten Endfläche 24.

Werden die beiden Bremsbacken 4, 5 an den in Fig. 1 nicht gezeigten Enden zum Hervorrufen einer Bremswirkung durch das Spannschloß auseinandergedrückt, so stützen sich die Bauteile der Löseeinrichtung 1 inklusive der beiden Bremsbacken 4, 5 zwangsweise gegeneinander ab, da die Krafteinleitungslinie 30 des fingerförmigen Fortsatzes 19 kolinear mit der Längsachse L des Verbindungsschenkels 10 verläuft und der Sekundärbremsbacken 5 so beeinflußt wird, daß der Winkelhebel 8 mit seinem Verbindungsschenkel 10 in der einen Schiebe-Endstellung an der Anschlagfläche 24 liegt. Insgesamt ist die Löseeinrichtung damit in ihrer Neutralstellung gehalten.

Bei einer Rückwärtsfahrt tritt die Löseeinrichtung 1 in Aktion, was in Fig. 2 dargestellt ist. Bei Rückwärtsfahren wird auf die beiden Bremsbacken 4, 5 ein Reibmoment ausgeübt, das in Richtung des Pfeiles R gemäß Fig. 2 weist. Damit wird auf den Sekundärbremsbacken 5 ein Drehmoment ausgeübt, das entgegen dem Uhrzeigersinn bezüglich Fig. 2 gerichtet ist, wodurch das Ende 3 des Sekundärbremsbackens 5 radial nach innen ausweicht. Gleichzeitig fällt durch das Reibmoment (Pfeil R) die Zwangsführung des Winkelhebels 8 durch den Primärbremsbacken 4 weg, so daß der Sekundärbremsbacken 5 mit seinem Ende 3 radial nach innen schwenken kann, wobei gleichzeitig der Winkelhebel 8 um das Dreh-Schiebe-Gelenk 9 an der Ankerplatte 6 entgegen dem Uhrzeigersinn verschwenken kann. Dabei rutscht das Ende 12 des Verbindungsschenkels 10 am Grund 26 der Aussparung in die zweite Schiebe-Endstellung und hält somit den Sekundärbremsbacken 5 in einer von der Bremstrommel abgehobenen Stellung. Durch die Schwenkbewegung des Winkelhebels 8 wird dessen Gelenkverbindung mit dem fingerförmigen Fortsatz 19 radial nach innen verlagert, so daß auch der Primärbremsbacken 4 von der Bremstrommel abgehoben wird. Beide Bremsbacken 4, 5 sind also gelöst und es kann eine ungebremste Rückwärtsfahrt stattfinden.

Durch das Verschwenken des Winkelhebels 8 bei der Rückwärtsfahrt wird gleichzeitig die Zugfeder 28 gespannt. Sie unterstützt dadurch die Positionsänderungen der Bauteile der Löseeinrichtung beim Wechsel von der Lösestellung (Fig. 2) in die Neutralstellung (Fig. 1).

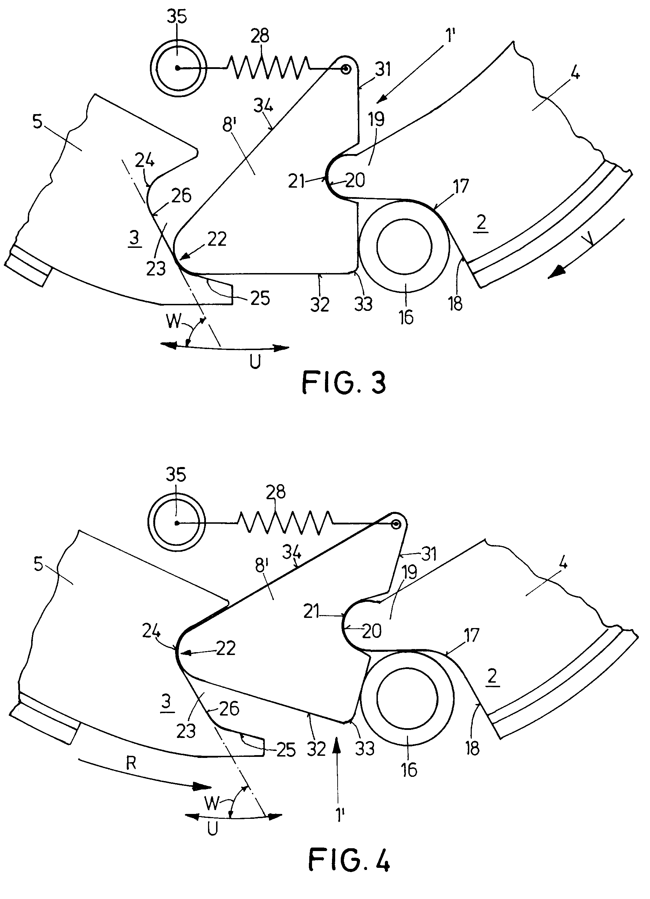

In den Fig. 3 und 4 ist eine Löseeinrichtung 1' gezeigt, die gegenüber der Löseeinrichtung nach den Fig. 1 und 2 konstruktiv vereinfacht ist. Übereinstimmende Bauteile bei den Ausführungsformen sind mit übereinstimmenden Bezugszeichen versehen und bedürfen damit keiner nochmaligen Erläuterung. Im folgenden sollen nur die relevanten Unterschiede zwischen den beiden Ausführungsformen aufgezeigt werden.

Statt eines Winkelhebels wird bei der Löseeinrichtung 1' ein Hebel 8' verwendet, der als Platte in Form eines rechtwinkligen Dreiecks vorliegt. Die beiden rechtwinklig aufeinanderstehenden Plattenseiten 31, 32 bilden dabei jedoch Bauteile, die dem Verbindungsschenkel 10 bzw. Lagerschenkel 13 des Winkelhebels 8 funktional gleichzusetzen sind.

Der Hebel 8' ist im Gegensatz zum Winkelhebel 8 nicht über ein Dreh-Schiebe-Gelenk mit der Ankerplatte 6 verbunden, sondern nur relativ zu dieser in einer Ebene verdrehbar, die parallel zur Ebene der Ankerplatte 6 liegt. Der Hebel 8' liegt mit seiner im wesentlichen quer zur Umfangsrichtung U verlaufenden Plattenseite 31 kurz dem Scheitel 33 am Anschlag 16 an, der damit als Abstützpunkt für die Verdrehbewegung des Hebels 8' dient. Die Plattenseite 31 weist ferner entsprechend dem Winkelhebel 8 eine konkav gewölbte Oberfläche 21 auf, in der die Endfläche 20 des fingerförmigen Fortsatzes 19 am Primärbremsbacken 4 anliegt.

An dem dem Anschlag 16 abgewandten Ende der im wesentlichen parallel zur Umfangsrichtung U verlaufenden Plattenseite 32 des Hebels 8' ist wiederum das Dreh-Schiebe-Gelenk 22 zur gelenkigen Verbindung des Hebels 8' mit dem Sekundärbremsbacken 5 gebildet. Dazu liegt der abgerundete Eckbereich des Hebels 8 zwischen dessen Plattenseite 32 und der dritten Plattenseite 34 in der Aussparung 23 drehbar und verschiebbar ein. Der Grund 26 der Aussparung 23 bildet mit der Umfangsrichtung U einen spitzen Winkel W, wobei die Neigungsrichtung der beim Ausführungsbeispiel gemäß den Fig. 1 und 2 entgegengesetzt ist.

Auch bei der Löseeinrichtung 1' ist eine Zugfeder 28 vorhanden, die jedoch zwischen dem dem Anschlag 16 abgewandten Ende der Plattenseite 31 und einem ankerplattenfesten Gegenlager 35 eingesetzt ist.

Bei Vorwärtsfahrt stützt sich der Primärbremsbacken am Anschlag 16 ab. Der fingerförmige Fortsatz 19 stützt den Hebel 8' in dieser Stellung ab, der aufgrund der Zugfeder 8 entgegen dem Uhrzeigersinn soweit verkippt wird, daß der Hebel 8' am Anschlag 16 anliegt. In dieser Stellung (Fig. 1) liegt das Ende der Plattenseite 32 an der unteren Endfläche 25 der Aussparung 23, wodurch der Sekundärbremsbacken 5 - genauso wie der Primärbremsbacken 4 - in seiner Neutralstellung gehalten ist.

Bei Rückwärtsfahrt wird über die Bremstrommel ein Drehmoment auf den Primär- und Sekundärbremsbacken 4, 5 übertragen, das entgegengesetzt dem Uhrzeigersinn wirkt. Der Primärbremsbacken 4 weicht dadurch in einer dem Uhrzeigersinn entgegengesetzten Richtung zurück (Fig. 2), so daß sich der Hebel 8' um seinen Abstützpunkt am Anschlag 16 im Uhrzeigersinn drehen kann. Dadurch wandert das anschlagferne Ende der Plattenseite 32 in der Aussparung 23 nach oben, wodurch der Sekundärbacken 5 durch das vorstehend erwähnte, von der Bremstrommel ausgeübte Drehmoment radial nach innen wandern kann. Damit wird die Bremstrommel freigegeben. Sowohl Primär- 4 als auch Sekundärbremsbacken 5 nehmen die in Fig. 4 gezeigte Lösestellung ein.

Sobald die Rückwärtsfahrt beendet ist, wird die Löseeinrichtung 1' im umgekehrten Sinne betätigt, was durch die beim Aktivieren der Löseeinrichtung 1' gespannte Zugfeder 28 unterstützt wird.

## Patentansprüche

1. Mechanische Löseeinrichtung zum automatischen Lösen von Auflaufbremsvorrichtungen bei der Rückwärtsfahrt von auflaufgebremsten Anhängern mit
- einer Ankerplatte (6), die der Auflauf-Trommelbremse zugeordnet ist, und
- einem Hebel (8', Winkelhebel 8), der relativ zur Ankerplatte (6) verdrehbar gelagert ist und jeweils derart gelenkig mit den einander zugewandten Enden (2, 3) von Primärbremsbacken (4) und Sekundärbremsbacken (5) verbunden ist, daß bei einer Rückwärtsfahrt die Bremsbacken (4, 5) durch eine Drehbewegung des Hebels (Winkelhebel 8) unter dem Einfluß des von der Bremstrommel auf die Bremsbacken (4, 5) ausgeübten Momentes anhebbar sind, dadurch gekennzeichnet,
- daß die Ankerplatte (6) einen Anschlag (16) zur Abstützung des Primärbremsbackens (4) trägt und
- daß die gelenkige Verbindung des Hebels (8', Winkelhebel 8) mit dem Sekundärbremsbacken (5) nach Art eines Dreh-Schiebe-Gelenkes (22) mit zwei Schiebe-Endstellungen aufgebaut ist,
- - so daß einerseits bei Vorwärtsfahrt unter Abstützung des Primärbremsbackens (4) am Anschlag (16), unter Zwangsbeaufschlagung des Hebels (8', Winkelhebel 8) durch den Primärbremsbacken (4) und unter Halterung des Sekundärbremsbackens (5) mittels des Hebels (8', Winkelhebel 8) in der ersten Schiebe-Endstellung sowohl der Primärbremsbacken (4) als auch der Sekundärbremsbacken (5) in ihrer Neutralstellung gehalten sind, und
- - so daß andererseits bei Rückwärtsfahrt und damit verbundener Bremsbetätigung aufgrund der Auflaufbremsvorrichtung unter Verschiebung und Verdrehung des Dreh-Schiebe-Gelenks (22) zwischen Sekundärbremsbacken (5) und Hebel (8', Winkelhebel 8) in die zweite Schiebeendstellung bei gleichzeitigem Abheben des Sekundärbremsbackens (5) von der Bremstrommel, unter damit verbundener Verschwenkung des Hebels (8', Winkelhebel 8) relativ zur Ankerplatte (6) und unter damit verbundenem Abheben des Primärbremsbackens (4) von der Bremstrommel sowohl der Primärbremsbacken (4) als auch der Sekundärbremsbacken (5) automatisch in ihre Lösestellung überführt werden.

2. Löseeinrichtung nach Anspruch 1, dadurch gekennzeichnet, daß der Hebel (8', Winkelhebel 8) mittels eines Dreh-Schiebe-Gelenks (9) drehbar und verschiebbar an der Ankerplatte (6) gelagert ist.

3. Löseeinrichtung nach Anspruch 1, dadurch gekennzeichnet, daß der Hebel (8') sich an dem Anschlag (16) als Drehpunkt für seine Drehbewegung beim Lösen abstützt.

4. Löseeinrichtung nach Anspruch 1, dadurch gekennzeichnet, daß der Hebel als Winkelhebel (8) ausgebildet, dessen ersten Schenkel als Verbindungsschenkel (10) zwischen dem Primär- (4) und Sekundärbremsbacken (5) verläuft und dessen zweiter Schenkel als Lagerschenkel (13) das Dreh-Schiebe-Gelenk (9) zur Verbindung mit der Ankerplatte (6) trägt.

5. Löseeinrichtung nach Anspruch 4, dadurch gekennzeichnet, daß das Dreh-Schiebe-Gelenk (9) zur Verbindung mit der Ankerplatte (6) aus einem Schlitz (15) im Lagerschenkel (13) des Winkelhebels (8) und einem darin eingreifenden Lagerbolzen (14) an der Ankerplatte (6) besteht.

6. Löseeinrichtung nach Anspruch 4, dadurch gekennzeichnet, daß der Schlitz (15) etwa rechtwinklig zur Längsachse (L) des Verbindungsschenkels (10) verläuft.

7. Löseeinrichtung nach einem der Ansprüche 1 bis 6, dadurch gekennzeichnet, daß der Anschlag (16) an der Ankerplatte (6) zur Abstützung des Primärbremsbackens (4) zylindrisch geformt ist, wobei sich der Primärbremsbacken (4) mit einer konkav geformten Anschlagfläche (17) am Anschlag (16) abstützt.

8. Löseeinrichtung nach einem der Ansprüche 1 bis 7, dadurch gekennzeichnet daß die gelenkige Verbindung zwischen Primärbremsbacken (4) und Hebel (8', Winkelhebel 8) durch einen fingerförmigen Fortsatz (19) am Primärbremsbacken (4) gebildet ist, der sich mit einer konvex geformten Endfläche (20) in einer konkav geformten, pfannenartigen Lagerfläche (21) am Hebel (8', Winkelhebel 8) abstützt.

9. Löseeinrichtung nach Anspruch 8, dadurch gekennzeichnet, daß der fingerförmige Fortsatz zwischen dem Anschlag (16) und dem Lagerbolzen (14) an der Ankerplatte (6) hindurchgreift

10. Löseeinrichtung nach einem der Ansprüche 1 bis 9, dadurch gekennzeichnet, daß das Dreh-Schiebe-Gelenk (22) zwischen dem Hebel (8', Winkelhebel 8) und dem Sekundärbremsbacken (5) durch eine quer zur Umfangsrichtung (U) der Bremstrommel bzw. zum Verbindungsschenkel (10) des Winkelhebels (8) verlaufende Aussparung (23) gebildet ist, deren beiden Endflächen (24, 25) die Anschläge für die beiden Schiebe-Endstellungen des Hebels (8', Winkelhebel 8) gegenüber dem Sekundärbremsbacken (5) bilden und an deren Grund (26) sich das freie Ende (12) des Hebels (8', Winkelhebel 8) abstützt.

11. Löseeinrichtung nach Anspruch 10, dadurch gekennzeichnet, daß der Grund (26) der Aussparung (23) derart einen spitzen Winkel (W) mit der Lüngsachse (L) des Verbindungsschenkels (10) bzw. der Umfangsrichtung (U) der Bremstrommel einnimmt, daß bei Rückwärtsfahrt der Sekundärbremsbacken (5) unter dem Einfluß des sich am Aussparungsgrund (26) abstützenden Hebel (8', Winkelhebel 8) in seine Lösestellung verbracht wird.

12. Löseeinrichtung nach einem der Ansprüche 1 bis 8, dadurch gekennzeichnet, daß zwischen dem Hebel (8') bzw. dem freien Ende (27) des Lagerschenkels (13) des Winkelhebels (8) und der Ankerplatte (6) bzw. dem Primärbremsbacken (4) eine Zugfeder (28) eingesetzt ist.
